# EUROPEAN PATENT SPECIFICATION

(11) **EP 3 817 980 B1**
(45) Date of publication and mention of the grant of the patent: **17.08.2022**
(21) Application number: 19752260.0
(22) Date of filing: 01.07.2019
(51) Int. Cl.: B65B 25/14, B65B 11/10, B65B 11/12, B65B 65/00, B65B 41/06, B65B 35/58, B65B 35/40, B65B 49/14, B65B 49/08, B65B 49/04, B65B 51/18, B65G 47/244, B65G 47/84, B65H 31/30

(54) **APPARATUS AND METHOD FOR WRAPPING PRODUCTS**
VORRICHTUNG UND VERFAHREN ZUM VERPACKEN VON PRODUKTEN
APPAREIL ET PROCÉDÉ DE CONDITIONNEMENT DE PRODUITS

(30) Priority: 04.07.2018 IT 201800006936
(43) Date of publication of application: 12.05.2021
(73) Proprietor: KÖRBER TISSUE FOLD S.r.l., 55016 Porcari (LU) (IT)
(72) Inventor: BUONI, Roberto, 55011 Altopascio (LU) - Fraz. Spianate (IT); BIANCHI, Massimo, 55049 Viareggio (LU) (IT); DINI, Graziano, 55022 Bagni di Lucca (LU) (IT); ANELLI, Stefano, 55016 Porcari (LU) (IT)
(74) Representative: ABM Agenzia Brevetti & Marchi
(86) International application number: PCT/IB2019/055560
(87) International publication number: WO 2020/008321

(56) References cited:
- EP-A2- 1 254 839
- WO-A1-2004/103819
- WO-A1-2007/144920
- US-A1- 2010 077 705
- US-A1- 2012 011 808
- US-A1- 2013 248 325
- US-A1- 2015 375 880
- US-B1- 6 390 276

## Description

### Field of the invention

The present invention relates to the field of apparatus for wrapping products, in particular products made of paper, such as stacks of napkins, tissue papers, but also rolls of paper, with a sheet of wrapping material.

The invention relates also to a method for wrapping such products.

### Description of the prior art

As known, mass-market products made of paper material such as stacks of napkins, stacks of tissue papers, but also rolls of paper, are normally packaged, that means wrapped with a film, or pellicle, of plastic material, generally polyethylene, or polypropylene, before being put on the market to be sold.

The plants for producing these kinds of products, therefore, generally provide a line that provides to carry out all the operations that are necessary for the wrapping.

Normally, a predetermined number of products to be wrapped are collected together and tidily conveyed along an advancing direction in order to be subjected to a series of operations. These, normally, provide to apply a wrapping sheet, to fold the free edges of the sheet around the product, in such a way that the edges are partially overlapped each other and connected together, generally by welding of thermoplastic material, or by applying glue. At the end, the wrapped products are discharged from the machine at a relative discharge station.

An example of a method and related apparatus for wrapping products is described in EP1254839. In this case, once a determined number of products, and precisely rolls of paper, has been collected and positioned longitudinally side by side, are, at first, fed along a feeding direction and, then, transferred along a direction orthogonal to the feeding direction, in order to hit a wrapping sheet advancing along a respective feeding direction that, therefore, wraps the products same. The edges of the wrapping sheet, which remain free, after the wrapping step, are, then, overlapped one another by folding members and, then, welded together by a tape welding machine. Then, the products are transferred from a first advancing direction to another that is orthogonal to the same, without changing the spatial orientation of the products, which are, then, subjected to further folding and welding steps in order to definitely close the edges of the wrapping sheets that are still free.

However, the solution described in EP1254839 has many drawbacks.

First of all, in order to carry out the above-mentioned rotation of 90° of the products without changing their spatial orientation, a rotating conveyor is used, which is provided of a series of radial arms. These are fixed at an end to a shaft arranged to rotate about a rotation axis and, at the free end, are, furthermore, provided with a respective grasp device pivoted on a pivot, in such a way to rotate, on their turn, with respect to the respective arm. The above-described rotating conveyor, in addition to be constructively complicated, has a large lateral encumbrance. Therefore, it is necessary to have a large area available for installing all the wrapping line above described. Furthermore, the encumbrance of a wrapping line that is not arranged according to a straight line involves, in a production plant, a significantly less effective exploitation of the surface. Therefore, under the same available surface, a less number of plants can be installed and with complicated solutions.

Another solution of prior art having analogous drawbacks is described in WO2004/103819.

### Summary of the invention

It is therefore an object of the present invention to provide an apparatus for wrapping products, in particular products made of paper material, such as stacks of napkins, folded, or interfolded, stacks of tissue papers, but also rolls of paper, that is able to overcome the above drawbacks of the prior art apparatuses.

It is in particular an object of the present invention to provide an apparatus for wrapping products having a small lateral encumbrance, in order that is possible, in case, to position more wrapping lines one next to another in order to increase the productivity.

It is also an object of the present invention to provide a method for wrapping products, in particular products made of paper material, having analogous advantages.

These and other objects are achieved by an apparatus for wrapping products, in particular stacks of sheets of paper overlapped each other, such as stacks of napkins, tissue papers, or similar products, said apparatus comprising:
- a feeding station configured to feed a plurality of products to be wrapped along a first predetermined feeding direction and a plurality of sheets of wrapping material in a second predetermined feeding direction, said first and second predetermined feeding directions being parallel to each other at least for a predetermined portion;
- a pushing station configured to selectively push each product of said plurality from said first feeding direction towards said respective wrapping sheet, at said predetermined portion, along a direction that is substantially orthogonal to said first and second feeding directions, in such a way to cause said respective wrapping sheet to be wrapped around said product to be wrapped leaving two end portions free, said pushing station being, furthermore, configured to cause said wrapped product to move on a support surface of a respective support element, which is movable along a predetermined advancing direction parallel to said first and second feeding direction;
- a displacement device configured to move said plurality of support elements along said predetermined advancing direction;
- a first folding station configured to fold the free end portions of said sheet wrapped around said product moving along said advancing direction, at a first side of said product;
- a first welding station configured to weld said folded end portions at said first side of said product;
- at least a second folding station configured to fold the end portions of said wrapping sheet at a second side of said product and at a third side opposite to said second side, to produce at least a partial overlap;
- at least a second welding station configured to weld said folded end portions of said wrapping sheet at said second and third sides of said product in order to complete the wrapping;
- a discharge station configured to discharge said wrapped products;
whose main characteristic of said apparatus is that between said first welding station and said second folding station a rotation station is provided configured to cause each support element to rotate for positioning the support element and, therefore, the respective wrapped product positioned on the respective support surface, from a first spatial orientation to a second spatial orientation that is orthogonal to the first one, and that after the rotation, said displacement device is arranged to move said rotated wrapped product along a second advancing direction parallel to, or coincident with, said advancing direction.

In particular, the technical solution according to the invention allows reducing with respect to the prior art solutions, the lateral encumbrances of the whole line. Therefore, it is possible to position many wrapping lines one next to the other, thus considerably increasing the productivity capacity of the plant.

Further characteristics of the invention and the relative embodiments are set out in the dependent claims.

Advantageously, the rotation station is configured to cause said rotation of said support element.

In particular, the displacement device comprises:
- a convey portion arranged to move along a predetermined trajectory;
- a plurality of connection devices, each connection device of said plurality being arranged to rotatably engage a respective support element of said plurality to said convey portion.

According to another aspect of the invention, a method for wrapping products constituted of a plurality of sheets of paper, comprises the steps of:
- feeding a plurality of products to be wrapped along a first predetermined feeding direction;
- feeding a plurality of sheets made of wrapping material, in a second predetermined feeding direction, said first and second predetermined feeding directions being parallel to each other at least for a predetermined portion wherein a wrapping sheet and a respective product of said plurality substantially travel at the same speed;
- pushing each product of said plurality from said first feeding direction towards said respective wrapping sheet, at said predetermined portion, along a direction substantially orthogonal to said first and second feeding directions, in such a way to cause said respective wrapping sheet to be wrapped around said product to be wrapped, and to cause said wrapped product to move on a support surface of a support element advancing along a predetermined advancing direction parallel to said first and second feeding directions;

- moving said plurality of support elements along said predetermined advancing direction;
- folding the end portions of said sheet wrapped around said product travelling along said advancing direction, at a first side of said product;
- welding said folded end portions at said first side of said product;
- folding the end portions of said wrapping sheet at a second side of said product, and a third side opposite to the second side;
- welding said folded end portions of said wrapping sheet at said second and third sides of said product in order to complete the wrapping;
- discharging said wrapped products;
whose main characteristic is that between said welding step of said end portions at said first side and said welding step of said end portions at said second and third sides, a rotation step of each support element is provided for bring the support element and, therefore, the respective wrapped product positioned on the respective support surface, from a first spatial orientation to a second spatial orientation orthogonal to the first one, and that after said rotation, said displacement device is arranged to move said rotated wrapped product along a second advancing direction parallel to, or coincident with, said advancing direction.

### Brief description of the drawings

The invention will now be shown with the following description of its exemplary embodiments, exemplifying but not limitative, with reference to the attached drawings in which:
- Fig.1 diagrammatically shows a perspective plan view of a first embodiment of an apparatus, according to the invention, for wrapping products, in particular products made of paper;
- Fig.2 diagrammatically shows a side elevation perspective view of a product processed by the apparatus of figure 1 exiting the pushing station;
- Fig.3 diagrammatically shows a side elevation perspective view of a product processed by the apparatus of figure 1 exiting the first folding station;
- Figures 4A and 4B diagrammatically show a possible embodiment according to the invention for the rotation station of the apparatus of figure 1;
- Fig.5 shows an enlargement of a side elevation perspective view of a rotation device
- Fig.6A diagrammatically shows a partially sectioned front view, a connection device provided by the present invention;
- Fig.6B diagrammatically shows a partially sectioned front view of a possible embodiment provided by the invention for the displacement device;
- Fig.7 diagrammatically shows a side elevation perspective view of a possible embodiment of a plant for wrapping products providing two apparatuses according to the invention positioned one next to the other;
- Fig.8 diagrammatically shows a plan view of a possible alternative embodiment of the apparatus for wrapping products of figure 1;
- Fig.9A diagrammatically shows a side elevation perspective view of a product processed by the apparatus according to the invention before being subjected to the operations carried out in the second folding station;
- Figures 9B to 9D diagrammatically show in successive instants, the product subjected to a series of operations by a particular embodiment provided by the invention for the second folding station;
- Fig.10 diagrammatically shows a plan view of a possible embodiment for the pushing station of the apparatus according to the present invention.

### Detailed description of some exemplary embodiments of the invention.

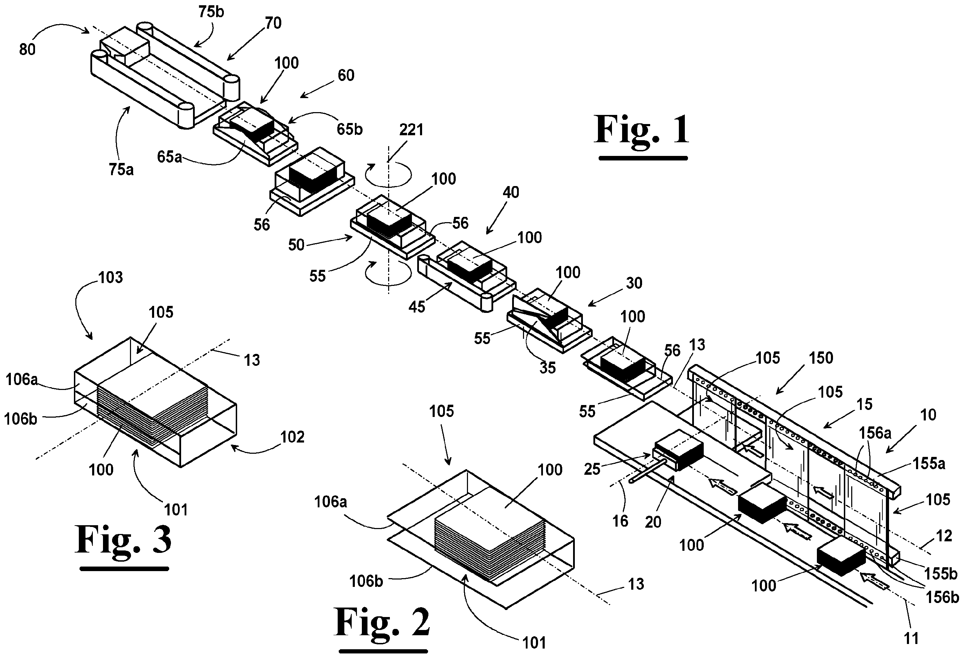

As diagrammatically shown in figure 1, an apparatus 1 for wrapping products 100, preferably constituted of a plurality of sheets of paper overlapped each other, such as a stack of sheets of paper, for example napkins, provides, in particular, a feeding station 10 configured to feed a plurality of products 100 to be wrapped along a first predetermined feeding direction 11, and a plurality of wrapping sheets, or films, 105, advantageously made of a wrapping material, for example polyethylene, or polypropylene, along a second predetermined feeding direction 12. In particular, the first and the second predetermined feeding directions 11 and 12 are parallel to each other at least for a predetermined portion in which a wrapping sheet 105 and a respective product 100 to be wrapped travel substantially at the same speed v1. More in particular, a pushing station 20 is provided configured to selectively push each product to be wrapped 100 from the first feeding direction 11 towards the respective wrapping sheet 105 in such a way to cause the respective wrapping sheet 105 to be wrapped around the product 100 to be wrapped, leaving two free end portions 106a and 106b, at a first side 101 of the product 100. In particular, as shown for example in figure 1, the above-mentioned push on the product to be wrapped 100 can be exerted by a pushing element 25 at the above-mentioned predetermined portion 15, advantageously along a direction 16 substantially orthogonal to the first and second feeding directions 11 and 12. The above-mentioned pushing station 20 is, in particular, configured to cause the product 100, once wrapped with the wrapping sheet 105, to move on a respective support element 55, advantageously provided of a horizontal support surface 56. The support element 55 is movably mounted along predetermined advancing direction 13 parallel to the first and second feeding directions 11 and 12. In particular, upstream of the feeding station 10, a cutting station, not shown in figure for reasons of simplicity, can be advantageously provided configured to cut a wrapping web unwound starting from a roll, in a plurality of wrapping sheets 105 of predetermined length. For example, the wrapping sheets 105 can be conveyed along the above-mentioned feeding direction 12 by a support frame 150, for example provided of a first and second "support rods" 155a and 155b, provided of retaining elements, for example suction holes 156a and 156 distributed along the above-mentioned support rods 155a and 155b, pneumatically connected to a vacuum generation system, also this not shown in figure for reasons of simplicity. Advantageously, on the support rods 155a and 155b can be engaged a perforated suction chain, i.e. in communication with the above-mentioned vacuum generation system. In particular, the perforated suction chain, while retains by suction the wrapping sheets 105, advances at the same speed v1 in the feeding direction 12. The sheet, in this case, is, therefore, retained and arranged to move forward by a couple of suction chains positioned at the upper side and at the lower side of the wrapping sheet 105.

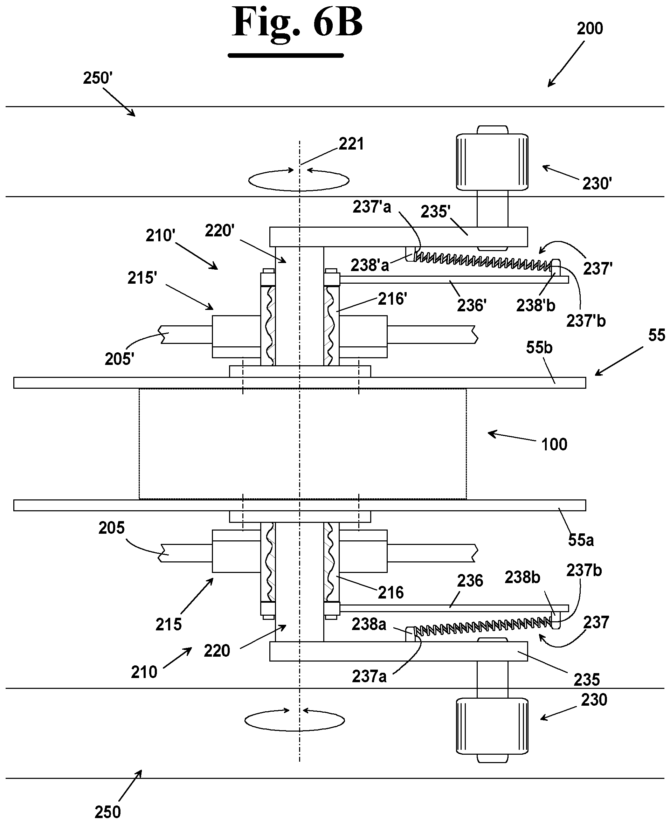

The apparatus 1, furthermore, provides a displacement device 200 configured to move the above disclosed plurality of support elements 55 along the above-mentioned predetermined advancing direction 13. In an embodiment provided and diagrammatically shown in figure 6B, the support element 55 can comprise a first and second plates 55a and 55b opposite one another. More in particular, the first and the second plates 55a and 55b are arranged at a distance such to press with a predetermined tightening force, the product 100 arranged between them. In this way, the product 100 is firmly engaged to support 55 with respect to which, therefore, is not movable during the moving step carried out by the displacement device 200 through the different stations of apparatus 1.

Downstream of the pushing station 20 a first folding station 30 is provided equipped with a folding device 35, of known kind in the field, configured to fold le end portions 106a and 106b of wrapping sheet 105 wrapped around the product 100 moving along the advancing direction 13, at the first side 101 of the product to be wrapped 100, in particular side 101 parallel to the advancing direction 13 (figure 2).

Advantageously, downstream of the first folding station 30, a first welding station 40 is provided configured to weld the end portions 106a and 106b of the wrapping sheet 105 folded at the above-mentioned first side 101 of the product 100, and preferably overlapped during the folding step. For example, the welding station 40 can be equipped with a tape welding device 45, not described in detail, but well known in the technical field.

A second folding station 60 is, furthermore, provided configured to fold the end portions 107a-107d and 108a-108d of the wrapping sheet at a second side 102 of product 100 and at a third side 103 opposite to the same (see figure 3). The end portions 107a-107d and 108a-108d are, then, welded at a second welding station 70, in such a way to complete the wrapping of product 100 and, therefore, to discharge the same from the line at a discharge station 80.

According to the invention, the second folding station 60 can carry out the folding of the end portions 107a-107d and 108a-108d, simultaneously, as shown in figure 1, or in different instants. In the first case, folding devices 65a and 65b are provided at the folding station 60 arranged at opposite sides with respect to the product 100 moving along the advancing direction 13, and acting simultaneously, in the second case, instead, the folding devices 65a and 65b act in two following instants. Analogously, it is also provided the possibility that the welding station 70 can carry out simultaneously the welding of the folded edges 107a-107d and 108a-108d, by welding devices 75a and 75b arranged at the same side of the product 100, and simultaneously acting at the respective sides 102 and 103, and in two different successive instants.

According to the present invention, apparatus 1, between the first and the second welding stations 40 and 60, provides, furthermore, a rotation station 50 configured to cause a rotation of a support element 55 at a time and to bring the same and, therefore, the wrapped product 100 positioned on the respective support surface 56, from a first spatial orientation to a second spatial orientation orthogonal to the first one. More in detail, after the rotation, the displacement device 200 is arranged to move the rotated wrapped product 100 along a second advancing direction 14 parallel to, or coincident with, the above-mentioned advancing direction 13.

In the embodiment shown in figure 1, the above-mentioned rotation station 50 is configured to cause support element 55 to rotate of 90° about the rotation axis 221 on which product 100 is positioned, that is, therefore, in his turn, rotated of 90°.

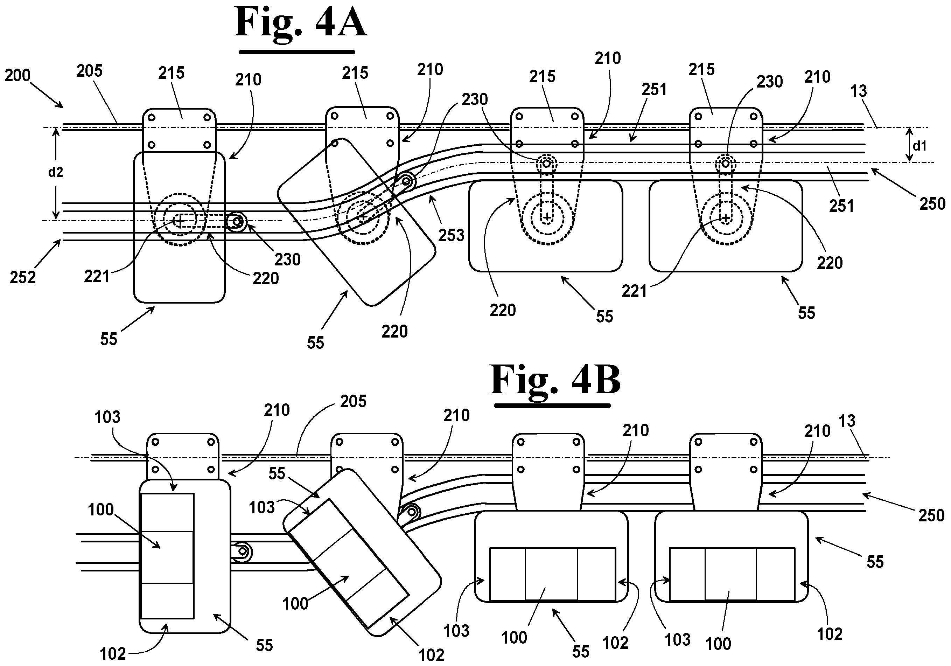

As diagrammatically shown in figure 4A, where the products 100 to be wrapped are not shown for reasons of clarity, and in the corresponding figure 4B, the displacement device 200 can provide a convey portion 205, for example a transmission belt operated by a motor in such a way to be movable along a predetermined trajectory, and a plurality of connection devices 210. Each connection device 210 is, in particular, arranged to rotatably engage a respective support element 55 to the convey portion 205.

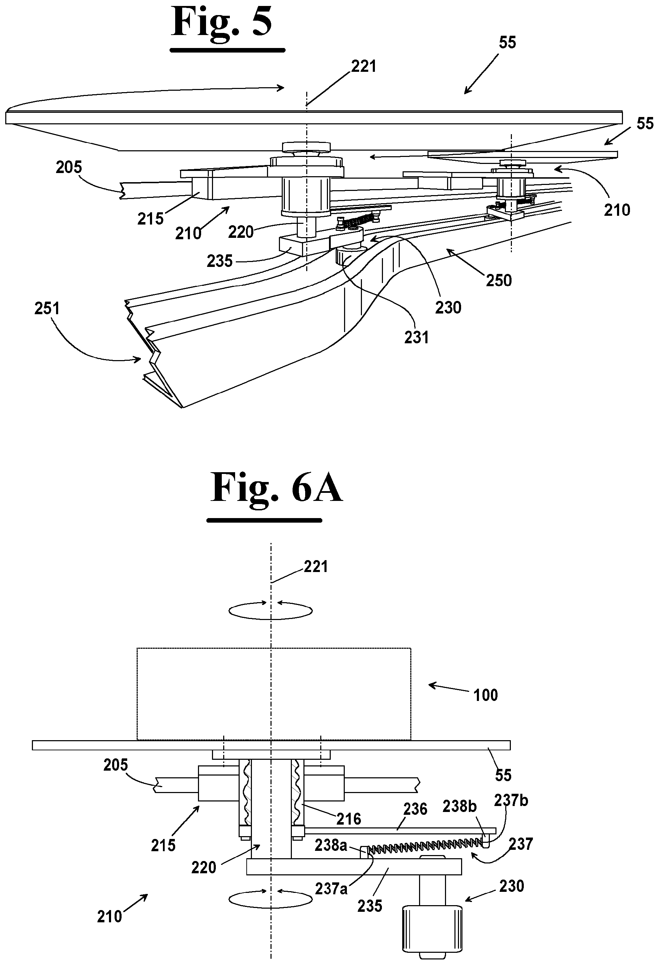

More precisely, as shown in detail in figure 4A, connection device 210 can provide a fixed portion 215 integral to the convey portion 205, and a rotatable portion 220 rotatably engaged to the fixed portion 215. In particular, the rotatable portion 220 is fixed to a respective support element 55. Therefore, when the rotatable portion 220 rotates with respect to the fixed portion 215, about its rotation axis 221, causes also a rotation of the respective support element 55 fixed to it. For example, as shown in figure 6A, the fixed portion 215 can comprise a bush portion 216, in which the rotatable portion 220 engages free to rotate about axis 221, in particular a vertical axis.

More in detail, guide 250 can comprise a first guide portion 251 parallel to the predetermined advancing direction 13 and arranged at a first distance d1 from this, and at least a second guide portion 252 parallel to the advancing direction and arranged at a second predetermined distance d2 from the same, with d2>d1. More in particular, the difference between the first and the second distances d1 and d2 from the advancing direction 13 is such to cause the above-mentioned rotation of the support elements 55, and, therefore, of products 100 positioned on the same. First and second guide portions 251 and 252 are connected by a shaped connection portion 253, preferably substantially "S"-shaped. The rotatable portion 220 is, then, advantageously integral to a orientation portion 230 through a transmission portion 235, for example cantilever connected to the rotatable portion 220. More precisely, the orientation portion 230 is configured in such a way to cause the above-mentioned rotation of the rotatable portion 220, and, then, of the support element 55, and of the product 100 positioned on the same, when passes through the shaped connection portion 253.

As shown in the embodiment of figure 6A, can be, furthermore, provided a return element 237 arranged to oppose the above disclosed rotation of rotatable portion 220, and therefore, of the support 55. In this way, in particular, the whole connection device 210 can be stabilized, in order to avoid rotations about axis 221 along the travel of support element 55 through guide 250 in different portions of the above disclosed shaped portion 253. For example, return element 237 can be an elastic return element, such as a linear spring having an end 237a fixed to the transmission portion 235 and the other end 237b fixed to a connection arm 236 that is, for example, fixed by bolts to the above-mentioned bush portion 216.

In a possible embodiment, the rotatable portion 220 is provided integral to an orientation portion 230 movably mounted along a guide 250. For example, the orientation portion 230 can provide a roll 231, or a wheel, or a similar element, slidingly mounted in a guiding slot 251 of guide 250 (figure 5) .

As shown in figure 6B, if the support element 55 comprises first and second support plates 55a and 55b opposite one another, the respective connection devices 210 and 210' are arranged to rotatably engage a respective support plate 55a, 55b to the displacement device 200 through the components above disclosed, and that are not, therefore, described here again. In particular, each support plate 55a and 55b is simultaneously conveyed by a respective transmission belt 220 and 220' along a respective path and guided in a respective guide 250, 250' by a respective orientation portion 230, 230'.

In an alternative embodiment, not shown in the figures for reasons of simplicity, the orientation portion can provide a skate element slidingly mounted along a guiding element 250.

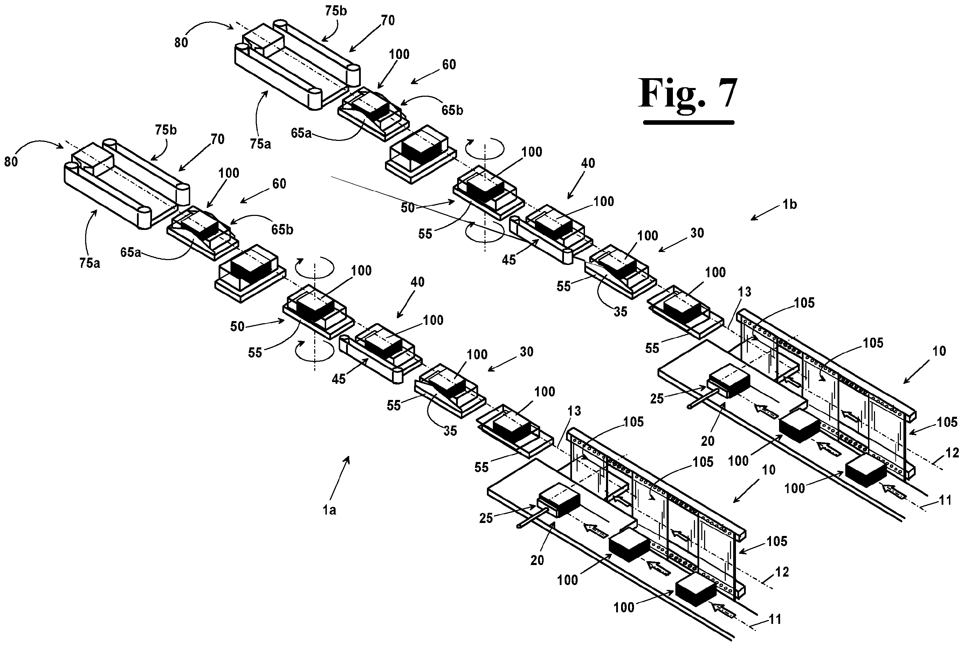

The particular technical solutions according to the invention above-mentioned allows, in particular, to position two apparatuses 1a and 1b, as above described, one next to another (see figure 7) and, therefore, to considerably increase the productivity of the plant with respect to the prior art solutions under the same occupied surface.

In an advantageous embodiment of the invention, the above disclosed displacement device 200 is configured to move the support elements 55 along a predetermined closed trajectory, in particular carousel-shaped.

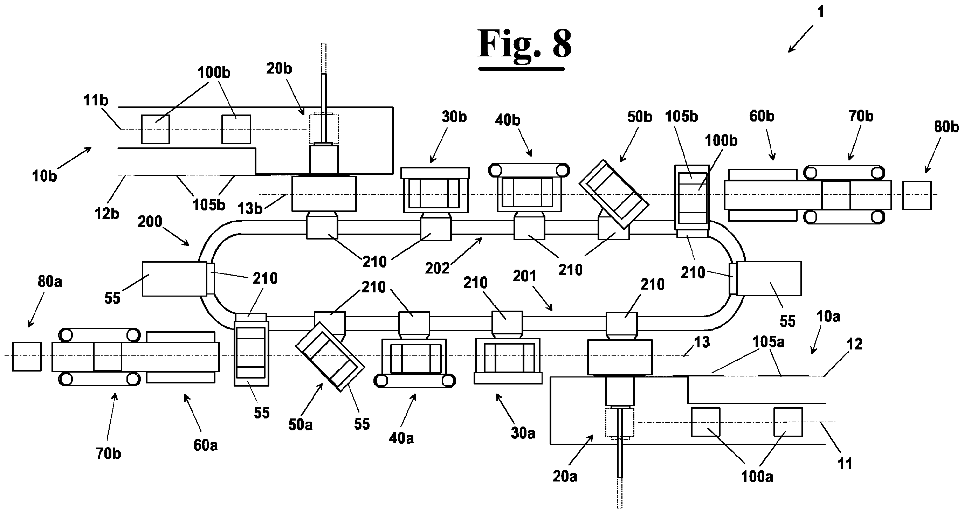

In this case, as diagrammatically shown in figure 8, the displacement device 200 can comprise a first portion 201 configured to move a first plurality of products 100a from a first feeding station 10a to a first discharge station 80a, and a second portion 202 configured to move a second plurality of products 100b from a second feeding station 10b arranged at the opposite side of the first feeding station 10a to a second discharge station 80b, arranged at the opposite side of the first discharge station 80a. More in particular, in this case, both the first portion 201 and the second portion 202 between the respective feeding stations 10a and 10b, and discharge stations 80a and 80b, provides respective first and second folding stations 30a, 30b and 60a, 60b between which the above disclosed first welding stations 40a and 40b, and the rotation stations 50a and 50b are provided. These, as above described in detail with reference to figures from 1 to 6, are configured to cause a rotation of 90° of the respective wrapped products 100a and 100b, maintaining the advancing direction without changing the advancing direction 13a and 13b. Downstream of the above disclosed second folding stations 60a and 60b are, then, provided the second welding stations 70a and 70b and, then, the discharge stations 80a and 80b.

In this way, therefore, it is possible to double the productivity with respect to the embodiment above described, in particular, with reference to figure 1, without having an excessive increase of the lateral encumbrance, owing to the technical solutions that have been chosen, in particular at the rotation station 50a and 50b. Like in the case of embodiment of figure 7, also the embodiment of figure 8 allows to position two apparatuses 1a and 1b one next to the other and, therefore, to increase the productivity of the plant, but in case of figure 8, the two apparatuses 1a and 1b are rotated of 180° one with respect to the other in order to use the same displacement device 200 for moving both the lines.

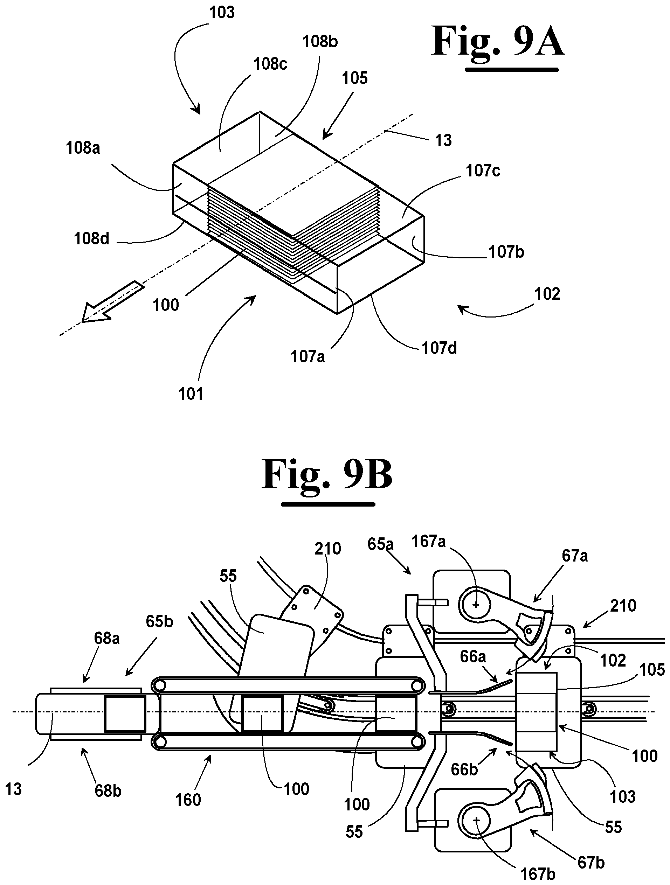

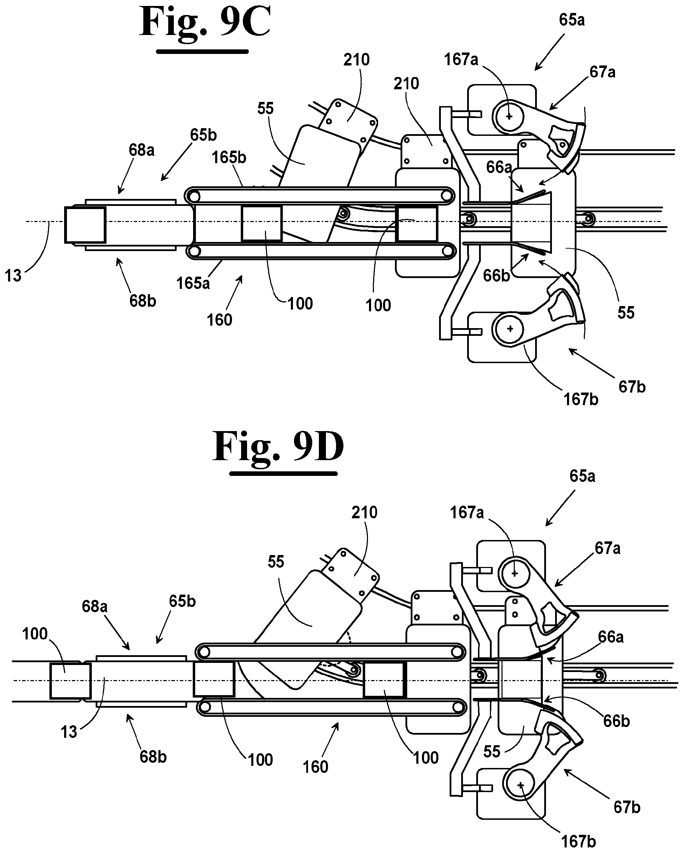

In the embodiment shown in detail in figures from 9A to 9D, the second folding station 60 provides a first folding device 65a configured to fold on the wrapped product 100, the front portions 107a and 108a, and the rear portions 107b and 108b, at the second and at the third sides 102 and 103, and a second folding device 65b configured to fold on the wrapped product 100, the upper portions 107c and 108c, and the lower portions 107d and 108d, at the second and third sides 102 and 103 (see figure 9A). More in particular, at the first folding device 65a first folding elements 66a and 66b are provided, respectively, positioned at the second and third sides 102 and 103, and arranged to substantially define a "narrowing" of the passage for product 100, in such a way to fold the front portions 107a and 108a of the edges.

The first folding device 65a, furthermore, provides second folding elements 67a and 67b positioned at opposite sides with respect to the advancing direction 13 and configured to "follow" the product 100 and to exert, respectively, at the second and the third sides 102 and 103, an impulse on a respective rear portion 107b and 108b of the end portions of wrapping sheet 105, in such a way to cause the same to be folded towards the wrapped product 100.

Advantageously, the second folding elements 67a and 67b are configured to rotate about respective rotation axes 167a and 167b, preferably such a way to be counter-rotating, for exerting the above disclosed impulse on the respective rear portion 107b and 108b of the end portions of the wrapping sheet 105.

Instead, at the second folding device 65b, third folding elements 68a and 68b are provided, not shown in detail in the figures for reasons of simplicity, configured to fold the upper and lower portions 107c and 107d and 108c and 108d, respectively at the second and third sides 102 and 103, in order to complete the folding of the different edges on product 100 and, therefore, to carry out the welding of the same at the second welding station 70.

Still as diagrammatically shown in figures from 9B to 9D, in a possible embodiment of the invention, in particular in case in which the displacement device 200 has the above disclosed carousel shape, downstream of the first folding device 65a, product 100 is transferred from support element 55 of displacement device 200 to a supplementary displacement device 160. This can comprise, for example, a first and a second transmission belts 165a and 165b configured to tighten between them the product 100 same at sides 102 and 103. In particular, the supplementary displacement device 160 is positioned above the support plane 56 of the support element 55. More in particular, in the case in which the support element is constituted by a first and a second plates 55a and 55b, the displacement device 160 is arranged between them.

In this way, it is possible to quickly and accurately transfer product 100 downstream of the displacement device 200, in such a way to make the respective support element 55 free, and, therefore, to carry out the last operations, before discharging the wrapped product 100 from machine 1. In this way, the transmission belts 165a and 165b in addition to convey the product 100 along the advancing direction 13, keep folded the portions of the front edges 107a and 108a and the rear portions 107b and 108b.

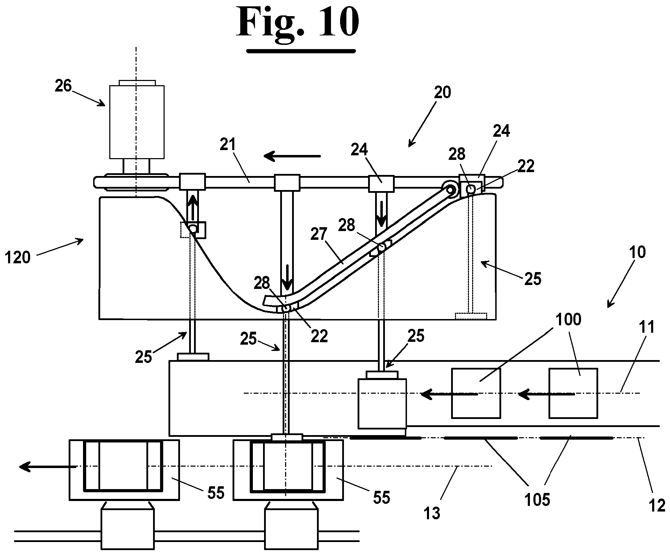

As diagrammatically shown in figure 10, the pushing station 20 can comprise a determined number of pushing elements 25 movably mounted on an actuation device 120 configured to selectively arrange each pushing element 25 at a pushing position at which is arranged to selectively exert a push on product 100 advancing along the above disclosed first feeding direction 11. In the embodiment of figure 10, the actuation device 120 provides a displacement element 21, for example a chain operated by a motor 26, on which the above-mentioned pushing elements 25 are mounted. The displacement element 21 is configured to move the pushing elements 25 along a direction parallel to the first and the second feeding directions 11 and 12. More in particular, each pushing element 25 provides a fixed part 24 integral to the displacement element 21, and a movable part 22, in particular a slidable part, arranged to slide with respect to the fixed part 24 from, or towards, the above-mentioned feeding direction 11, preferably along a pushing direction 16 that is substantially orthogonal to the same. More precisely, sliding of the slidable part 22 with respect to the fixed part 24 can be caused by a cam element 27 configured to actuate and to guide the above sliding, for example at an engagement portion 28, such as a roll, or a similar element, integral to the slidable part 22.

## Claims

1. An apparatus (1) for wrapping products (100), in particular stacks of overlapped sheets of paper, such as stacks of napkins, tissue papers, or similar products, said apparatus (1) comprising:
- a feeding station (10) configured to feed a plurality of products (100) to be wrapped along a first predetermined feeding direction (11), and a plurality of wrapping sheets (105) along a second predetermined feeding direction (12), said first and second predetermined feeding directions (11,12) being parallel to each other at least for a predetermined portion (15) ;
- a pushing station (20) configured to selectively push each product (100) of said plurality from said first feeding direction (11) towards said respective wrapping sheet (105), at said predetermined portion (15), along a direction substantially orthogonal to said first and second feeding directions (11,12), in such a way to cause said respective wrapping sheet (105) to be wrapped around said product to be wrapped (100) leaving free end portions, said pushing station (20) being, furthermore, configured to cause said product (100) to move on a support surface (56) of a respective support element (55) that is movably mounted along a predetermined advancing direction (13) parallel to said first and second feeding directions (11,12);
- a displacement device (200) configured to move said plurality of support elements (55) along said predetermined advancing direction (13);
- a first folding station (30) configured to fold at a first side (101) of said product (100) the free end portions of said wrapping sheet (105) wrapped around said product (100);
- a first welding station (40) configured to weld said folded end portions at said first side (101) of said product (100);
- at least a second folding station (60) configured to fold the end portions of said wrapping sheet (105) at a second side (102) of said product (100) and of a third side (103) opposite to said second side (102);
- at least a second welding station (70) configured to weld said folded end portions of said wrapping sheet (105) at said second and third sides (102, 103) of said product (100) in order to complete the wrapping;
- a discharge station (80) configured to discharge said wrapped products (100);
said apparatus (1) being **characterised in that** between said first welding station (40) and said second folding station (60) a rotation station (50) is provided configured to cause each support element (55) to rotate to position said support element (55) and, therefore, the respective wrapped product (100) positioned on the respective support surface (56), from a first spatial orientation to a second spatial orientation orthogonal to the first one, **and in that** after said rotation, said displacement device (200) is arranged to move said rotated wrapped product (100) along a second advancing direction parallel to, or coincident with, said advancing direction (13).

2. Apparatus, according to claim 1, wherein said displacement device (200) comprises:
- a convey portion (205) arranged to move along a predetermined trajectory;
- a plurality of connection devices (210), each connection device (210) of said plurality being arranged to rotatably engage a respective support element (55) of said plurality to said convey portion (205).

3. Apparatus, according to claim 2, wherein each said connection device (210) provides:
- a fixed portion (215) integral to said convey portion (205); and
- a rotatable portion (220) rotatably engaged to said fixed portion (215), to said rotatable portion (220) being fixed a respective support element (55).

4. Apparatus, according to claim 3 wherein said rotatable portion (220) is configured to rotate about a vertical rotation axis (221).

5. Apparatus, according to claim 3, or 4, wherein said rotatable portion (220) is engaged to an orientation portion (230) arranged to move along a guide (250).

6. Apparatus, according to claim 5, wherein said guide (250) comprises:
- a first guide portion (251) parallel to said predetermined advancing direction (13), and arranged at a first distance d1 from this;
at least a second guide portion (252) also this parallel to said first advancing direction (13) and arranged at a second predetermined distance d2 from the same, with d2>d1;
- a shaped connection portion (253) arranged to connect said first and second guide portions (251, 252), said orientation portion (230) being configured in such a way to cause said rotation of said rotatable portion (220) when it crosses said shaped connection portion (253).

7. Apparatus, according to claim 6, wherein said rotatable portion (220) is integral to said orientation portion (230) through a transmission portion (235) cantilever connected to said rotatable portion (220).

8. Apparatus, according to claim 6, wherein a return element (237) is, furthermore, provided configured to oppose said rotation of said rotatable portion (220), and, therefore, of said support element (55).

9. Apparatus, according to any of the previous claims, wherein said displacement device (200) is configured to move a plurality of support elements (55) along a predetermined closed trajectory.

10. Apparatus, according to claim 9, wherein said closed trajectory comprises:
- a first portion (201) configured to move a first plurality of products (100a) from a first feeding station (10a) to a first discharge station (80a); and
- a second portion (202) configured to move a second plurality of products from a second feeding station (10b) arranged at the opposite side of said first feeding station (10a) to a second discharge station (80b) arranged at the opposite side of said first discharge station (80a).

11. Apparatus, according to any of the previous claims, wherein said second folding station (60) comprises:
- a first folding device (65a) configured to fold on said wrapped product (100) the front portions (107a, 108a), and the rear portions (107b, 108b) of said wrapping sheet (105), with respect to said advancing direction (13), at said second and third sides (102, 103) ;
- a second folding device (65b) configured to fold on the wrapped product (100) the upper portions (107c, 108c) and the lower portions (107d, 108d) of said wrapping sheet (105), at said second and third sides (102, 103).

12. Apparatus, according to claim 11, wherein at said first folding device (65a) are provided:
- first folding elements (66a, 66b) respectively positioned at said second and third sides (102, 103), and arranged to substantially define a narrowing of the passage for said product (100);
- second folding elements (67a, 67b) positioned at opposite sides with respect to said advancing direction (13) and configured to rotate about respective rotation axes (167a, 167b), in such a way to be counter-rotating, said second folding elements (67a, 67b) being arranged to exert, respectively at said second and third sides (102, 103), an impulse on a respective rear portion (107b, 108b) of said wrapping sheet (105) in order to cause the folding of the same on said wrapped product (100).

13. Apparatus, according to any of the previous claims, wherein downstream of said first folding device (65a) a supplementary displacement device (160) is provided comprising a first and a second transmission belts (165a, 165b) configured to tighten between them said product (100) at said second and third sides (102, 103), said displacement device (200) being configured to remove said support element (55) once said product (100) is tightened by said supplementary displacement device (160).

14. Apparatus, according to any of the previous claims, wherein said pushing station (20) comprises a plurality of pushing elements (25) mounted on an actuation device (120) configured to selectively arrange each pushing element (25) of said plurality at a pushing position in order to selectively exert said push on a product (100) of said plurality, each pushing element (25) comprising a fixed part (24) integral to a displacement element (21) configured to displace the pushing elements (25) along a direction parallel to said first and second feeding directions (11, 12), and a slidable part (22) arranged to slide with respect to the fixed part (24) from, or towards, said feeding direction (11).

15. Method for wrapping products, in particular stacks of sheets of paper overlapped each other, such as stacks of napkins, tissue papers, or similar products, said method comprising the steps of:
- feeding a plurality of products to be wrapped (100) along a first predetermined feeding direction (11);
- feeding a plurality of wrapping sheets (105) in a second predetermined feeding direction (12), said first and second predetermined feeding directions (11, 12) being parallel to each other at least for a predetermined portion, wherein a wrapping sheet (105) and a respective product (100) of said plurality travel substantially at the same speed;
- pushing each product (100) of said plurality from said first feeding direction (11) towards said respective wrapping sheet (105), at said predetermined portion, said being carried out along a direction substantially orthogonal to said first and second feeding directions (11,12), in such a way to cause said respective wrapping sheet (105) to be wrapped around said product to be wrapped (100), and to cause said wrapped product to move on a support surface (56) of a support element (55) advancing along a predetermined advancing direction (13) parallel to said first and second feeding directions (11,12);
- moving said plurality of support elements (55) along said predetermined advancing direction (13);
- folding end portions of said wrapping sheet (105) wrapped around said product (100) advancing along said first advancing direction (13), at a first side (101) of said product (100);
- welding said folded end portions at said first side (101) of said product;
- folding the end portions of said wrapping sheet (105) at a second side (102) of said product and a third side (103) opposite to said second side;
- welding said folded end portions of said wrapping sheet (105) at said second and of said third side (102, 103) of said product in order to complete the wrapping;
- discharging said wrapped products;
said method being **characterised in that** between said welding step of said end portions at said first side (101), and said welding step of said end portions at said second and of said third side (102,103), a rotation step is provided for bringing each support element (55) and, therefore, the respective wrapped product positioned on the respective support surface (56), from a first spatial orientation to a second spatial orientation orthogonal to the first one, and **in that** after said rotation, said displacement device (200) is arranged to move said rotated product along a second advancing direction parallel to, or coincident with, said advancing direction (13).

## Patentansprüche

1. Gerät (1) zum Verpacken von Produkten (100), insbesondere von Stapeln überlappender Papierbögen, wie z. B. Stapel von Servietten, Papiertüchern oder ähnlichen Produkten, das Gerät (1) umfassend:
- eine Zuführstation (10), die konfiguriert ist, um eine Vielzahl von zu verpackenden Produkten (100) entlang einer ersten vorbestimmten Zuführrichtung (11) und eine Vielzahl von Verpackungsbögen (105) entlang einer zweiten vorbestimmten Zuführrichtung (12) zuzuführen, wobei die erste und die zweite vorbestimmte Zuführrichtung (11, 12) mindestens für einen vorbestimmten Abschnitt (15) parallel zueinander sind;
- eine Schiebestation (20), die konfiguriert ist, um selektiv jedes Produkt (100) der Vielzahl von Produkten aus der ersten Zuführrichtung (11) zu dem jeweiligen Verpackungsbogen (105) an dem vorbestimmten Abschnitt (15) entlang einer Richtung schiebt, die im Wesentlichen orthogonal zu der ersten und der zweiten Zuführrichtung (11, 12) ist, sodass der jeweilige Verpackungsbogen (105) um das zu verpackende Produkt (100) gewickelt wird, wobei freie Endabschnitte hinterlassen werden, wobei die Schiebestation (20) ferner konfiguriert ist, um das Produkt (100) zu veranlassen, sich auf einer Tragfläche (56) eines jeweiligen Tragelements (55) zu bewegen, das entlang einer vorbestimmten Vorlaufrichtung (13) parallel zu der ersten und der zweiten Zuführrichtung (11, 12) beweglich montiert ist;
- eine Verschiebevorrichtung (200), die konfiguriert ist, um die Vielzahl von Tragelementen (55) entlang der vorbestimmten Vorlaufrichtung (13) zu bewegen;
- eine erste Faltstation (30), die konfiguriert ist, um an einer ersten Seite (101) des Produkts (100) die freien Endabschnitte des um das Produkt (100) gewickelten Verpackungsbogens (105) zu falten;
- eine erste Schweißstation (40), die konfiguriert ist, um die gefalteten Endabschnitte an der ersten Seite (101) des Produkts (100) zu verschweißen;
- mindestens eine zweite Faltstation (60), die konfiguriert ist, um die Endabschnitte des Verpackungsbogens (105) an einer zweiten Seite (102) des Produkts (100) und an einer dritten Seite (103) gegenüber der zweiten Seite (102) zu falten;
- mindestens eine zweite Schweißstation (70), die konfiguriert ist, um die gefalteten Endabschnitte des Verpackungsbogens (105) an der zweiten und der dritten Seite (102, 103) des Produkts (100) zu verschweißen, um die Verpackung zu vervollständigen;
- eine Entladestation (80), die konfiguriert ist, um die verpackten Produkte (100) zu entladen;
wobei das Gerät (1) **dadurch gekennzeichnet ist, dass** zwischen der ersten Schweißstation (40) und der zweiten Faltstation (60) eine Drehstation (50) bereitgestellt ist, die konfiguriert ist, um jedes Tragelement (55) zu veranlassen, zu drehen, um das Tragelement (55) und somit das jeweilige verpackte Produkt (100), das auf der jeweiligen Tragfläche (56) positioniert ist, aus einer ersten räumlichen Ausrichtung in eine zweite räumliche Ausrichtung orthogonal zu der ersten Ausrichtung zu positionieren, **und dass** nach der Drehung die Verschiebevorrichtung (200) angeordnet ist, um das gedrehte verpackte Produkt (100) entlang einer zweiten Vorlaufrichtung parallel zu oder übereinstimmend mit der Vorlaufrichtung (13) zu bewegen.

2. Gerät nach Anspruch 1, wobei die Verschiebevorrichtung (200) Folgendes umfasst:
- einen Förderabschnitt (205), der angeordnet ist, um sich entlang einer vorbestimmten Bahn zu bewegen;
- eine Vielzahl von Verbindungsvorrichtungen (210), wobei jede Verbindungsvorrichtung (210) der Vielzahl angeordnet ist, um ein jeweiliges Tragelement (55) der Vielzahl drehbar mit dem Förderabschnitt (205) einzugreifen.

3. Gerät nach Anspruch 2, wobei jede der Verbindungsvorrichtung (210) Folgendes bereitstellt:
- einen feststehenden Abschnitt (215), der einstückig mit dem Förderabschnitt (205) ist; und
- einen drehbaren Abschnitt (220), der drehbar mit dem feststehenden Abschnitt (215) eingegriffen ist, wobei an dem drehbaren Abschnitt (220) ein jeweiliges Tragelement (55) befestigt ist.

4. Gerät nach Anspruch 3, wobei der drehbare Abschnitt (220) konfiguriert ist, um um eine vertikale Drehachse (221) zu drehen.

5. Gerät nach Anspruch 3 oder 4, wobei der drehbare Abschnitt (220) mit einem Ausrichtungsabschnitt (230) eingreift, der angeordnet ist, um sich entlang einer Führung (250) zu bewegen.

6. Gerät nach Anspruch 5, wobei die Führung (250) Folgendes umfasst:
- einen ersten Führungsabschnitt (251), der parallel zu der vorbestimmten Vorlaufrichtung (13) und in einem ersten Abstand d1 davon angeordnet ist;
mindestens einen zweiten Führungsabschnitt (252), der auch parallel zu der ersten Vorlaufrichtung (13) und in einem zweiten vorbestimmten Abstand d2 von dieser angeordnet ist, wobei d2>d1;
- einen geformten Verbindungsabschnitt (253), der angeordnet ist, um den ersten und den zweiten Führungsabschnitt (251, 252) zu verbinden, wobei der Ausrichtungsabschnitt (230) auf eine Weise konfiguriert ist, um die Drehung des drehbaren Abschnitts (220) zu bewirken, wenn er den geformten Verbindungsabschnitt (253) kreuzt.

7. Gerät nach Anspruch 6, wobei der drehbare Abschnitt (220) durch einen Übertragungsabschnitt (235), der freitragend mit dem drehbaren Abschnitt (220) verbunden ist, einstückig mit dem Ausrichtungsabschnitt (230) ist.

8. Gerät nach Anspruch 6, wobei außerdem ein Rückstellelement (237) bereitgestellt ist, das konfiguriert ist, um der Drehung des drehbaren Abschnitts (220) und damit des Tragelements (55) entgegenzuwirken.

9. Gerät nach einem der vorherigen Ansprüche, wobei die Verschiebevorrichtung (200) konfiguriert ist, um eine Vielzahl von Tragelementen (55) entlang einer vorbestimmten geschlossenen Bahn zu bewegen.

10. Gerät nach Anspruch 9, wobei die geschlossene Bahn Folgendes umfasst:
- einen ersten Abschnitt (201), der konfiguriert ist, um eine erste Vielzahl von Produkten (100a) von einer ersten Zuführstation (10a) zu einer ersten Entladestation (80a) zu bewegen; und
- einen zweiten Abschnitt (202), der konfiguriert ist, um eine zweite Vielzahl von Produkten von einer zweiten Zuführstation (10b), die auf der gegenüberliegenden Seite der ersten Zuführstation (10a) angeordnet ist, zu einer zweiten Entladestation (80b) zu bewegen, die auf der gegenüberliegenden Seite der ersten Entladestation (80a) angeordnet ist.

11. Gerät nach einem der vorherigen Ansprüche, wobei die zweite Faltstation (60) Folgendes umfasst:
- eine erste Faltvorrichtung (65a), die konfiguriert ist, um die vorderen Abschnitte (107a, 108a) und die hinteren Abschnitte (107b, 108b) des Verpackungsbogens (105) in Bezug auf die Vorlaufrichtung (13) an der zweiten und dritten Seite (102, 103) auf das verpackte Produkt (100) zu falten;
- eine zweite Faltvorrichtung (65b), die konfiguriert ist, um die oberen Abschnitte (107c, 108c) und die unteren Abschnitte (107d, 108d) der Verpackungsbogen (105) an der zweiten und dritten Seite (102, 103) auf dem verpackten Produkt (100) zu falten.

12. Gerät nach Anspruch 11, wobei an der ersten Faltvorrichtung (65a) Folgendes bereitgestellt ist:
- erste Faltelemente (66a, 66b), die jeweils an der zweiten und der dritten Seite (102, 103) positioniert sind, und angeordnet sind, um im Wesentlichen eine Verengung des Durchgangs für das Produkt (100) zu definieren;
- zweite Faltelemente (67a, 67b), die an gegenüberliegenden Seiten in Bezug auf die Vorlaufrichtung (13) positioniert und konfiguriert sind, um um entsprechende Drehachsen (167a, 167b) auf eine Weise zu drehen, um gegenläufig zu sein, wobei die zweiten Faltelemente (67a, 67b) angeordnet sind, um jeweils an der zweiten und der dritten Seite (102, 103) einen Impuls auf einen jeweiligen hinteren Abschnitt (107b, 108b) des Verpackungsbogens (105) auszuüben, um das Falten desselben auf dem verpackten Produkt (100) zu bewirken.

13. Gerät nach einem der vorherigen Ansprüche,
wobei stromabwärts von der ersten Faltvorrichtung (65a) eine ergänzende Verschiebevorrichtung (160) bereitgestellt ist, umfassend einen ersten und einen zweiten Übertragungsriemen (165a, 165b), die konfiguriert sind, um das Produkt (100) an der zweiten und der dritten Seite (102, 103) zwischen sich zu spannen, wobei die Verschiebevorrichtung (200) konfiguriert ist, um das Tragelement (55) zu entfernen, sobald das Produkt (100) durch die ergänzende Verschiebevorrichtung (160) gespannt ist.

14. Gerät nach einem der vorherigen Ansprüche,
wobei die Schiebestation (20) eine Vielzahl von Schiebeelementen (25) umfasst, die an einer Betätigungsvorrichtung (120) montiert sind, die konfiguriert ist, um jedes Schiebeelement (25) der Vielzahl selektiv in einer Schiebeposition anzuordnen, um den Schub selektiv auf ein Produkt (100) der Vielzahl auszuüben, jedes Schiebeelement (25) umfassend ein feststehendes Teil (24), das einstückig mit einem Verschiebungselement (21) ist, das konfiguriert ist, um die Schiebeelemente (25) entlang einer Richtung parallel zu der ersten und der zweiten Zuführrichtung (11, 12) zu verschieben, und ein verschiebbares Teil (22), das angeordnet ist, um in Bezug auf das feststehende Teil (24) aus der oder in Richtung der Zuführrichtung (11) zu gleiten.

15. Verfahren zum Verpacken von Produkten, insbesondere von Stapeln von Papierbögen, die einander überlappen, wie z. B. Stapel von Servietten, Papiertüchern oder ähnlichen Produkten, das Verfahren umfassend die folgenden Schritte:
- Zuführen einer Vielzahl von zu verpackenden Produkten (100) entlang einer ersten vorbestimmten Zuführrichtung (11);
- Zuführen einer Vielzahl von Verpackungsbögen (105) in einer zweiten vorbestimmten Zuführrichtung (12), wobei die erste und die zweite vorbestimmte Zuführrichtung (11, 12) mindestens für einen vorbestimmten Abschnitt parallel zueinander sind, wobei sich ein Verpackungsbogen (105) und ein jeweiliges Produkt (100) der Vielzahl im Wesentlichen mit der gleichen Geschwindigkeit bewegen;
- Schieben von jedem Produkt (100) der Vielzahl von Produkten aus der ersten Zuführrichtung (11) in Richtung des jeweiligen Verpackungsbogens (105) an dem vorbestimmten Abschnitt, wobei dies entlang einer Richtung im Wesentlichen orthogonal zu der ersten und zweiten Zuführrichtung (11, 12) auf eine solche Weise durchgeführt wird, dass der jeweilige Verpackungsbogen (105) um das zu verpackende Produkt (100) gewickelt wird und das verpackte Produkt veranlasst wird, sich auf einer Tragfläche (56) eines Tragelements (55) zu bewegen, das sich entlang einer vorbestimmten Vorlaufrichtung (13) parallel zu der ersten und der zweiten Zuführrichtung (11, 12) vorwärts bewegt;
- Bewegen der Vielzahl von Tragelementen (55) entlang der vorbestimmten Vorlaufrichtung (13);
- Falten von Endabschnitten des um das Produkt (100) gewickelten Verpackungsbogens (105), der sich entlang der ersten Vorlaufrichtung (13) vorwärts bewegt, an einer ersten Seite (101) des Produkts (100);
- Verschweißen der gefalteten Endabschnitte an der ersten Seite (101) des Produkts;
- Falten der Endabschnitte des Verpackungsbogens (105) an einer zweiten Seite (102) des Produkts und einer dritten Seite (103) gegenüber der zweiten Seite;
- Verschweißen der gefalteten Endabschnitte des Verpackungsbogens (105) an der zweiten und der dritten Seite (102, 103) des Produkts, um die Verpackung zu vervollständigen;
- Entladen der verpackten Produkte;
wobei das Verfahren **dadurch gekennzeichnet ist, dass** zwischen dem Verschweißungsschritt der Endabschnitte an der ersten Seite (101) und dem Verschweißungsschritt der Endabschnitte an der zweiten und der dritten Seite (102, 103) ein Drehschritt bereitgestellt ist, um jedes Tragelement (55) und somit das jeweilige verpackte Produkt, das auf der jeweiligen Tragfläche (56) positioniert ist, aus einer ersten räumlichen Ausrichtung in eine zweite räumliche Ausrichtung orthogonal zu der ersten zu bringen, und **dass** nach der Drehung die Verschiebevorrichtung (200) angeordnet ist, um das gedrehte Produkt entlang einer zweiten Vorlaufrichtung parallel zu oder übereinstimmend mit der Vorlaufrichtung (13) zu bewegen.

## Revendications

1. Appareil (1) destiné à envelopper des produits (100), en particulier des piles de feuilles de papier qui se chevauchent, telles que des piles de serviettes, de papiers de soie ou de produits similaires, ledit appareil (1) comprenant :
- une station d'alimentation (10) conçue pour acheminer une pluralité de produits (100) à envelopper le long d'une première direction d'alimentation prédéfinie (11), et une pluralité de feuilles d'enveloppement (105) le long d'une seconde direction d'alimentation prédéfinie (12), lesdites première et seconde directions d'alimentation prédéfinies (11, 12) étant parallèles l'une à l'autre au moins pour une partie prédéfinie (15) ;
- une station de poussée (20) conçue pour pousser sélectivement chaque produit (100) de ladite pluralité de ladite première direction d'alimentation (11) vers ladite feuille d'enveloppement respective (105), au niveau de ladite partie prédéfinie (15), le long d'une direction sensiblement orthogonale auxdites première et seconde directions d'alimentation (11, 12), d'une façon telle que ladite feuille d'enveloppement respective (105) est amenée à être enroulée autour dudit produit à envelopper (100) en laissant des parties d'extrémité libres, ladite station de poussée (20) étant, en outre, conçue pour amener ledit produit (100) à se déplacer sur une surface de support (56) d'un élément de support respectif (55) qui est monté mobile le long d'une direction d'avance prédéfinie (13) parallèle auxdites première et seconde directions d'alimentation (11, 12) ;
- un dispositif de déplacement (200) conçu pour déplacer ladite pluralité d'éléments de support (55) le long de ladite direction d'avance prédéfinie (13) ;
- une première station de pliage (30) conçue pour plier au niveau d'un premier côté (101) dudit produit (100) les parties d'extrémité libres de ladite feuille d'enveloppement (105) enroulées autour dudit produit (100) ;
- une première station de soudage (40) conçue pour souder lesdites parties d'extrémité pliées au niveau dudit premier côté (101) dudit produit (100) ;
- au moins une seconde station de pliage (60) conçue pour plier les parties d'extrémité de ladite feuille d'enveloppement (105) au niveau d'un deuxième côté (102) dudit produit (100) et d'un troisième côté (103) opposé audit deuxième côté (102) ;
- au moins une seconde station de soudage (70) conçue pour souder lesdites parties d'extrémité pliées de ladite feuille d'enveloppement (105) au niveau desdits deuxième et troisième côtés (102, 103) dudit produit (100) afin de terminer l'enveloppement ;
- une station de déchargement (80) conçue pour décharger lesdits produits enveloppés (100) ;
ledit appareil (1) étant **caractérisé en ce qu'**entre ladite première station de soudage (40) et ladite seconde station de pliage (60), une station de rotation (50) est prévue conçue pour amener chaque élément de support (55) à tourner pour positionner ledit élément de support (55) et, par conséquent, le produit enveloppé respectif (100) positionné sur la surface de support respective (56), d'une première orientation spatiale à une seconde orientation spatiale orthogonale à la première, **et en ce qu**'après ladite rotation, ledit dispositif de déplacement (200) est agencé pour déplacer ledit produit enveloppé tourné (100) le long d'une seconde direction d'avance parallèle à ladite direction d'avance (13) ou coïncidant avec celle-ci.

2. Appareil selon la revendication 1, ledit dispositif de déplacement (200) comprenant :
- une partie de transport (205) agencée pour se déplacer le long d'une trajectoire prédéfinie ;
- une pluralité de dispositifs de raccordement (210), chaque dispositif de raccordement (210) de ladite pluralité étant agencé pour mettre en prise de manière rotative un élément de support respectif (55) de ladite pluralité avec ladite partie de transport (205).

3. Appareil selon la revendication 2, chaque dispositif de raccordement (210) fournissant :
- une partie fixe (215) solidaire de ladite partie de transport (205) ; et
- une partie rotative (220) en prise de manière rotative avec ladite partie fixe (215), un élément de support respectif (55) étant fixé à ladite partie rotative (220).

4. Appareil selon la revendication 3, ladite partie rotative (220) étant conçue pour tourner autour d'un axe de rotation vertical (221).

5. Appareil selon la revendication 3 ou 4, ladite partie rotative (220) étant en prise avec une partie d'orientation (230) agencée pour se déplacer le long d'un guide (250).

6. Appareil selon la revendication 5, ledit guide
(250) comprenant :
- une première partie de guidage (251) parallèle à ladite direction d'avance prédéfinie (13), et agencée à une première distance d1 de cette-dernière ;
au moins une seconde partie de guidage (252) également parallèle à ladite première direction d'avance (13) et agencée à une seconde distance prédéfinie d2 de celle-ci, avec d2>d1 ;
- une partie de raccordement façonnée (253) agencée pour raccorder lesdites première et seconde parties de guidage (251, 252), ladite partie d'orientation (230) étant conçue d'une façon telle que ladite partie rotative (220) est amenée à tourner lorsqu'elle croise ladite partie de raccordement façonnée (253).

7. Appareil selon la revendication 6,
ladite partie rotative (220) faisant partie intégrante de ladite
partie d'orientation (230) à travers une partie de transmission (235) raccordée en porte-à-faux à ladite partie rotative (220).

8. Appareil selon la revendication 6, un élément de retour (237) étant, en outre, prévu conçu pour s'opposer à ladite rotation de ladite partie rotative (220) et, par conséquent, dudit élément de support (55).

9. Appareil selon l'une quelconque des revendications précédentes, ledit dispositif de déplacement (200) étant conçu pour déplacer une pluralité d'éléments de support (55) le long d'une trajectoire fermée prédéfinie.

10. Appareil selon la revendication 9, ladite trajectoire fermée comprenant :
- une première partie (201) conçue pour déplacer une première pluralité de produits (100a) d'une première station d'alimentation (10a) à une première station de déchargement (80a) ; et
- une seconde partie (202) conçue pour déplacer une seconde pluralité de produits d'une seconde station d'alimentation (10b) agencée du côté opposé de ladite première station d'alimentation (10a) vers une seconde station de déchargement (80b) agencée du côté opposé à ladite première station de déchargement (80a).

11. Appareil selon l'une quelconque des revendications précédentes, ladite seconde station de pliage (60) comprenant :
- un premier dispositif de pliage (65a) conçu pour plier sur ledit produit enveloppé (100) les parties avant (107a, 108a) et les parties arrière (107b, 108b) de ladite
feuille d'enveloppement (105), par rapport à ladite direction d'avance (13), au niveau desdits deuxième et troisième côtés (102, 103) ;
- un second dispositif de pliage (65b) conçu pour plier sur le produit enveloppé (100) les parties supérieures (107c, 108c) et les parties inférieures (107d, 108d) de ladite feuille d'enveloppement (105), au niveau desdits deuxième et troisième côtés (102, 103).

12. Appareil selon la revendication 11, au niveau dudit premier dispositif de pliage (65a) sont prévus :
- des premiers éléments de pliage (66a, 66b) respectivement positionnés au niveau desdits deuxième et troisième côtés (102, 103), et agencés pour définir sensiblement un rétrécissement du passage pour ledit produit (100) ;
- des seconds éléments de pliage (67a, 67b) positionnés au niveau des côtés opposés par rapport à ladite direction d'avance (13) et conçus pour tourner autour d'axes de rotation respectifs (167a, 167b), d'une façon telle
qu'ils sont contrarotatifs, lesdits seconds éléments de pliage (67a, 67b) étant agencés pour exercer, respectivement au niveau
desdits deuxième et troisième côtés (102, 103), une impulsion sur
une partie arrière respective (107b, 108b) de ladite feuille d'enveloppement (105) afin d'entraîner le pliage de celle-ci sur ledit produit enveloppé (100).

13. Appareil selon l'une quelconque des revendications précédentes,
en aval dudit premier dispositif de pliage (65a) un dispositif de déplacement supplémentaire (160) étant prévu comprenant une première et une seconde courroies de transmission (165a, 165b) conçues pour serrer entre elles ledit
produit (100) au niveau desdits deuxième et troisième côtés (102, 103), ledit dispositif de déplacement (200) étant conçu pour retirer ledit élément de support (55) une fois que ledit produit (100) est serré par ledit dispositif de déplacement supplémentaire (160).

14. Appareil selon l'une quelconque des revendications précédentes,
ladite station de poussée (20) comprenant une pluralité d'éléments de poussée (25) montés sur un dispositif d'actionnement (120) conçu pour agencer sélectivement chaque élément de poussée (25) de ladite pluralité au niveau d'une position de poussée afin d'exercer sélectivement ladite poussée sur un produit (100) de ladite pluralité, chaque élément de poussée (25) comprenant une partie fixe (24) faisant partie intégrante d'un élément de déplacement (21) conçu pour déplacer les éléments de poussée (25) le long d'une direction parallèle auxdites première et seconde directions d'alimentation (11, 12), et une partie coulissante (22) agencée pour coulisser
par rapport à la partie fixe (24) à partir de ladite direction d'alimentation (11), ou vers celle-ci.

15. Procédé permettant l'enveloppement de produits, en particulier des piles de feuilles de papier qui se chevauchent, telles que des piles de serviettes, de papiers de soie ou de produits similaires, ledit procédé comprenant les étapes de :
- acheminement d'une pluralité de produits à envelopper (100) le long d'une première direction d'alimentation prédéfinie (11) ;
- acheminement d'une pluralité de feuilles d'enveloppement (105) dans une seconde direction d'alimentation prédéfinie (12), lesdites première et seconde directions d'alimentation prédéfinies (11, 12) étant parallèles l'une à l'autre au moins pour une partie prédéfinie, une feuille d'enveloppement (105) et un produit respectif (100) de ladite pluralité circulant sensiblement à la même vitesse ;
- poussée de chaque produit (100) de ladite pluralité à partir de ladite première direction d'alimentation (11) vers ladite feuille d'enveloppement respective (105), au niveau de ladite partie prédéfinie, ladite étant effectuée le long d'une direction sensiblement orthogonale auxdites première et seconde directions d'alimentation (11, 12), d'une façon telle que ladite feuille d'enveloppement respective (105) est amenée à s'enrouler autour dudit produit à envelopper (100), et que ledit produit enveloppé est amené à se déplacer sur une surface de support (56) d'un élément de support (55) avançant le long d'une direction d'avance prédéfinie (13) parallèle auxdites première et seconde directions d'alimentation (11, 12) ;
- déplacement de ladite pluralité d'éléments de support (55) le long de ladite direction d'avance prédéfinie (13) ;
- pliage des parties d'extrémité de ladite feuille d'enveloppement (105) enroulée autour dudit produit (100) avançant le long de ladite première direction d'avance (13), au niveau d'un premier côté (101) dudit produit (100) ;
- soudage desdites parties d'extrémité pliées au niveau dudit premier côté (101) dudit produit ;
- pliage des parties d'extrémité de ladite feuille d'enveloppement (105) au niveau d'un deuxième côté (102) dudit produit et
d'un troisième côté (103) opposé audit deuxième côté ;
- soudage desdites parties d'extrémité pliées de ladite feuille d'enveloppement (105) au niveau dudit deuxième et dudit troisième côté (102, 103) dudit produit afin de compléter l'enveloppement ;
- décharge desdits produits enveloppés ;
ledit procédé étant **caractérisé en ce qu'**entre ladite étape de soudage desdites parties d'extrémité au niveau dudit premier côté (101), et ladite étape de soudage desdites parties d'extrémité au niveau dudit deuxième et dudit troisième côté (102, 103), une étape de rotation est prévue pour amener chaque élément de support (55) et, par conséquent, le produit enveloppé respectif positionné sur la surface de support respective (56), d'une première orientation spatiale à une seconde orientation spatiale orthogonale à la première, et **en ce qu'**après ladite rotation, ledit dispositif de déplacement (200) est agencé pour déplacer ledit produit tourné le long d'une seconde direction d'avance parallèle à ladite direction d'avance (13) ou coïncidant avec celle-ci.
